# EUROPEAN PATENT SPECIFICATION

(11) **EP 1 597 567 B1**
(45) Date of publication and mention of the grant of the patent: **05.07.2006**
(21) Application number: 04703437.6
(22) Date of filing: 20.01.2004
(51) Int. Cl.: G01N 25/72, G01N 29/04

(54) **IDENTIFICATION OF MATERIALS BY NON DESCTRUCTIVE TESTING**
IDENTIFIKATION VON MATERIALIEN DURCH ZERSTÖRUNGSFREIE PRÜFUNG
IDENTIFICATION DE MATERIAUX AU MOYEN D'UN ESSAI NON DESTRUCTIF

(30) Priority: 20.01.2003 GB 0301231
(43) Date of publication of application: 23.11.2005
(73) Proprietor: Rolton Group Limited, Higham Ferrers, Northants NN10 8DN (GB); GB Geotechnics Limited, Cambridge GB5 0NB (GB)
(72) Inventor: ROLTON, Peter E., Hogham Ferrers, Northants NN10 8DN (GB); BALLARD, George S., G B Geotechnics Limited, Cambridge CB5 ONB (GB)
(74) Representative: Hedges, Martin Nicholas
(86) International application number: PCT/GB2004/000221
(87) International publication number: WO 2004/065950

(56) References cited:
- FR-A- 2 820 204
- US-A- 3 759 085
- US-A- 4 799 375
- US-A- 5 489 778
- US-A- 5 533 399
- US-A- 5 562 345
- DATTOMA V ET AL: "Thermographic investigation of sandwich structure made of composite material" NDT & E INTERNATIONAL, BUTTERWORTH-HEINEMANN, OXFORD,, GB, vol. 34, no. 8, December 2001 (2001-12), pages 515-520, XP004273613 ISSN: 0963-8695
- PATENT ABSTRACTS OF JAPAN vol. 0181, no. 25 (P-1701), 28 February 1994 (1994-02-28) -& JP 05 312742 A (I N R KENKYUSHO:KK), 22 November 1993 (1993-11-22)
- DATABASE COMPENDEX [Online] ENGINEERING INFORMATION, INC., NEW YORK, NY, US; BROOKE PHILIP: "Fire risks of insulated panels in the food industry" XP002306646 Database accession no. EIX95342765395 & FIRE PREV; FIRE PREVENTION MAY 1995 FIRE PROTECTION ASSOC, LONDON, ENGL, no. 279, May 1995 (1995-05), pages 25-27,
- RAJU P K ET AL: "CHARACTERIZATION OF DEFECTS IN GRAPHITE FIBER BASED COM OSITE STRUCTURES USING THE ACOUTIC IMPACT TECHNIQUE (AIT)" JOURNAL OF TESTING AND EVALUATION, AMERICAN SOCIETY FOR TESTING AND MATERIALS. PHILADELPHIA, US, vol. 21, no. 5, 1 September 1993 (1993-09-01), pages 377-395, XP000411347 ISSN: 0090-3973
- PAOLOZZI A ET AL: "Experimental assessment of debonding damage in a carbon-fibre reinforced plastic sandwich panel by frequency variations" COMPOS STRUCT; COMPOSITE STRUCTURES AUG 1996 ELSEVIER SCIENCE LTD, OXFORD, ENGL, vol. 35, no. 4, August 1996 (1996-08), pages 435-444, XP002322343
- YAM L H ET AL: "Identification of complex crack damage for honeycomb sandwich plate using wavelet analysis and neural networks" SMART MATER STRUCT; SMART MATERIALS AND STRUCTURES OCTOBER 2003, vol. 12, no. 5, October 2003 (2003-10), pages 661-671, XP002322344

## Description

The present invention relates to non-destructive methods of identifying materials and in particular to methods of non-destructively identifying composite insulation material.

Panels manufactured from composite insulation material have been widely used for a number of years in the food industry to make insulated chambers for the cold storage of food stuffs. Until recently, however, there has been no industry standard for the actual composition of such panels. Instead, panels have typically been manufactured by small scale operations each of whom have their own preferred "in house" material composition and manufacturing systems, and as a result, panels incorporating a variety of insulation materials including expanded and foamed polymers, mineral wool and other materials of low thermal conductivity, sandwiched between thin steel sheets, exist.

Due to the inflammable nature of some of the material which are commonly used in these composite insulation materials, and the toxic nature of the gas emitted when certain of these materials bum, fire brigades are now refusing to enter and fight fires in buildings which use these composite insulation materials unless it can be shown that the composition of the insulation material used in the building does not pose an unacceptable risk to the fire-fighters. If the owner/tenant of the building is not able to supply such information, the fire fighters will only fight the fire from a "safe" distance, which usually results in much more major damage to the premises and its contents than would have been the case if the fire had been fought from inside. It clearly, then, follows that the risk of a large amount of damage in the event of a fire is significantly increased in premises which are not able to supply to the fire brigade information on the composition of the insulation material which they utilise for cold storage chambers, and, having recognised this higher risk assessment, insurance companies are now taking account of the presence and type of composite insulation material in buildings when calculating insurance premiums for both building and contents insurance. In the event that the proposer is unable to provide this information, the insurance premia are significantly increased to reflect the insurance company's perceived greater risk, often to a level which makes insurance prohibitively expensive to the proposer.

US5562345 discloses a thermographical analysis of the structure of composite material. An article by P.K. Raju et al. in the Journal of Testing and Evaluation (vol. 21, no. 5, 1993, p. 377) discloses the characterization of defects in composite structures using the acoustic impact technique.

The problem which most users of composite insulation material face is, then, that due to the fact that they are erected by small scale local companies, who do not normally have any records which indicate the actual composition of the panels which have been installed and are unable to trace the manufacturer to obtain that information. At present, then, the only way to identify the material is to take a core sample and analyse it, but this process destroys the integrity of the panel and hence necessitates its replacement. There is, then, a need for a method of identifying the composition of composite insulation material which does not involve physically damaging the panels, and in particular does not require removing, penetrating or otherwise disrupting the outer skin of the panel.

In accordance with a first test, there is provided a method of non-destructive testing a panel of composite insulation material comprising the steps of heating a portion of a surface of the test panel, measuring the heat dissipation from said surface over time in order to produce a heat dissipation characteristic for said test panel, and comparing said heat dissipation characteristic with heat dissipation characteristics obtained from panels of known composition, hereinafter referred to as reference heat dissipation characteristics, in order to identify the composition of the test panel.

A method of non-destructive testing composite insulation material in accordance with the invention has the advantage that it enables the composition of the panels of insulation material to be ascertained quickly, reliably and easily without the need for intrusive or destructive procedures to be carried out, so that panels will only need to be replaced if they are found to include or be composed of undesirable materials.

Preferably, the panel is heated by applying a heat source, in particular a local or point heat source, to a portion of one surface thereof for a pre-defined time or until a pre-defined amount of energy has been imparted to the panel. This may be achieved particularly advantageously, in the case of panels having outer skins formed of metal, by using an electro-magnetic coupler. More particularly, the electromagnetic coupler may include coils wound on a magnetically susceptible core constructed as an incomplete magnetic circuit, and may be used in conjunction with a wave generator and amplifier which operates to excite the coils. Upon bringing the coupler into close proximity with the panel, the magnetic circuit completes with magnetic flux passing through the outer skin, causing electrical eddy currents to be generated which heat the skin. This arrangement has the advantage that the amount of heated added to the panel can be measured particularly accurately, thereby enabling the test conditions to be re-produced very easily.

Of course, it is also possible utilise other systems for heating the panel within the scope of the invention. For example, for panels which do not have a conductive metal skin, a radiant heat source may be applied against the surface of the panel for a pre-defined time in order to raise the temperature of the panel at the application point by a pre-defined amount.

The heat dissipation from the surface is preferably measured by viewing the portion of the surface of the panel which is heated and measuring the thermal radiation emitted therefrom. It has been found to be particularly advantageous to take measurements at regular time intervals throughout the thermal decay cycle of the panel until it has returned to, or near to, ambient temperature, preferably at least 10 readings being taken at equally spaced time intervals. However, continuous readings may also be taken.

A thermal imaging device is preferably used to monitor the thermal radiation emitted from the panel within a viewing area which is centered on the point of application of the heat source. It has been found to be particularly effective for the viewing area of the imager to be three times the diameter of the area to which the heat source / local heating device is applied.

According to a second test, there is provided a method of non-destructive testing a panel of composite insulation material comprising the steps of striking the surface of the test panel in order to pass a pulse of energy therethrough, measuring the vibrations within the panel over time in order to produce characteristic vibratory modes for the test panel, and comparing said characteristic vibratory modes with characteristic vibratory modes obtained from panels of known composition, hereinafter referred to as reference characteristic vibratory modes, in order to identify the composition of the test panel.

Preferably, the surface of the panel is struck with a tuned hammer, this having the advantage of producing in the panel an energy pulse at a known centre in particular frequency centre frequency and of narrow band-width, thereby improving the accuracy of the test results. The resulting vibrations within the panel are preferably monitored using an acoustic sensor, capable of responding to frequencies at least one octave over the anticipated resonant frequencies and in particular which takes vibration measurements capable of defining the amplitude overtime and frequencies of the vibratory modes.

It has been found that certain panel types produce similar heat dissipation or characteristic vibratory modes even though they are composed of insulation material having different compositions and this makes the unique identification of these panels using either of the two methods alone difficult.

According to the invention, therefore, both the heat dissipation test and the vibratory mode test are carried out on each panel in order to obtain characteristic curves of both the heat dissipation and the vibratory mode qualities of the panel, the results again being compared with curves and characteristics obtained from panels of known composition in order uniquely to identify the composition of the test panel.

This approach has the advantage that it enables all known panel types uniquely to be identified, even if either their heat dissipation characteristic or their vibratory mode characteristic is not completely unique.

In order that the invention may be well understood, there will now be described an embodiment thereof, given by way of example, reference being made to the accompanying drawings, in which:
Figure 1 is a section through a typical insulation panel of the type on which the present invention is intended to be used;
Figure 2 is a schematic view of a heating device which may be used to provide localised heating to a surface of the test material;
Figure 3 is a schematic view of a thermal imaging device arranged to measure the radiation emitted from the heated surface of the test material; and
Figure 4 is a schematic view of an acoustic device which can be used with the method of the invention.

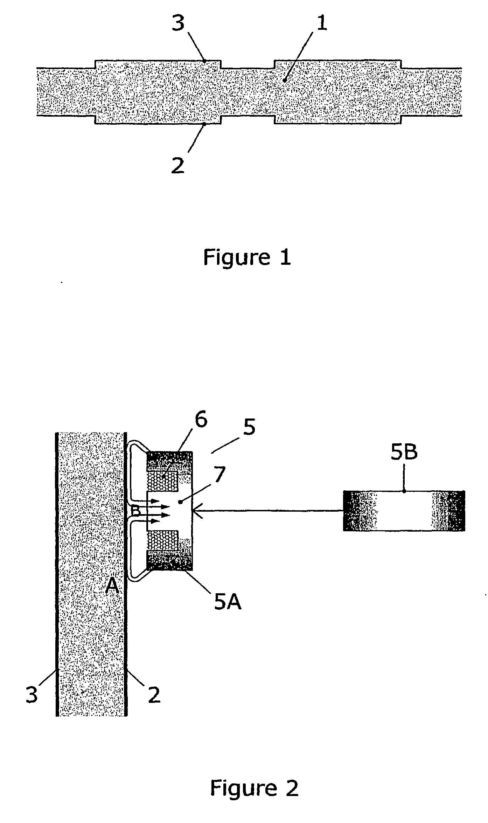

Referring first to Figure 1, there is shown a section through a typical insulation panel used to construct an insulated chamber for the cold storage of food stuffs and the like. The panel is composed of a composite insulation material 1, which might include expanded and foamed polymers, mineral wool and other materials of low thermal conductivity, sandwiched between outer thin steel sheets 2, 3. These outer sheets 2, 3 are typically profiled and coated or painted.

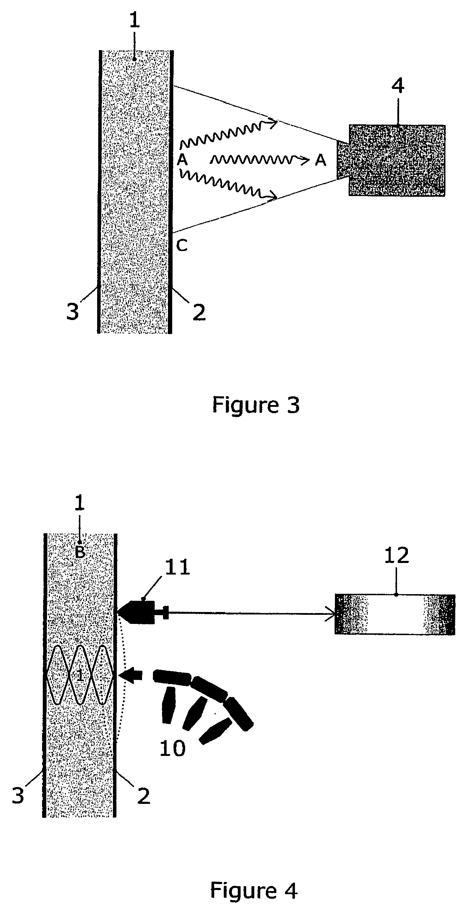

A thermal imaging device 4 is positioned in front of and a short distance away from the outer surface of one of the steel sheets 2 and arranged to view a circular area C-C' as illustrated in Figure 3. Once the thermal imaging device 4 has been positioned, a heating device 5 which provides local heating, is applied against the outer surface of the steel sheet 2 substantially in the centre of the circular viewing area of the thermal imaging device 4. The heating device 5 preferably comprises an electro-magnetic coupler 5A which includes coils 6 wound on to a magnetic core 7 constructed with an incomplete magnetic circuit, and a combined wave generator and amplifier 5B which operates to excite the coupler 5A. When the coupler 5A is brought into close proximity to the steel sheet 2, its magnetic circuit is completed with magnetic flux 8 passing through the sheet 2. Eddy currents are thereby generated in the sheet steel lying in the magnetic pathway, which eddy currents generate heat in the steel sheet 2.

The heating device 5 is applied to the surface until a predefined amount of energy has been transferred, or until a fixed current has been passed for a predefined time period; and the current is then immediately switched off and the device removed from the surface of the sheet 2 so as to allow the thermal imager 4 to take unobstructed measurements of the radiation emitted from within the viewing area C-C'. It has been found to be particularly effective for the viewing area C-C' of the thermal imager 4 to be three times the diameter of the are to which local heating device 5 is applied.

Once the heating device 5 has been removed, the thermal imaging device 4 records the infra-red radiation A' emitted from the viewing area toward the thermal imaging device 4 by taking measurements at regular time intervals through the thermal decay cycle of the steel sheet 2 until it has returned to approximately the ambient temperature. Preferably, at least ten readings should be taken at equally spaced time intervals.

Heat is lost from the steel sheet 2 in one direction to the surrounding atmosphere, and hence towards the imaging device 4, by radiation from its surface, and by conduction through the insulating material 1 towards the other steel sheet 2. The heat lost from the surface of the steel sheet to the atmosphere is common to all panel types and compositions, whereas the heat lost to the insulation is specific to the insulation material used. Thus, the relative proportions in which the heat is lost in these two ways is characteristic of the insulation material which is sandwiched between the steel sheets 2, 3. Since the total amount of energy applied to the steel sheet 2 is known, the readings taken by the thermal imaging device 4 are characteristic of the amount of energy conducted into the insulating material, and by comparing these results to with the characteristic curves generated by measuring the heat dissipation from panels whose composition is known, the composition of the test material can be ascertained.

It is, however, possible that two panels of differing composition could have substantially the same heat dissipation characteristic making definitive identification using the above described system more difficult. In order to overcome this, a second test is also carried out using the apparatus illustrated in Figure 4 to take an acoustic measurement of the panel. The surface of the steel sheet 2 is struck with a tuned hammer 10, which passes a pulse of energy through the insulation material 1 and causes the steel sheet to vibrate as a diaphragm as shown by the dotted line in Figure 4. The energy pulse passes through the insulation material 1 and is reflected back by the steel sheet 3 forming the opposite skin of the panel at a speed which is governed by the acoustic velocity of the insulation material 1 and at an amplitude governed by its acoustic attenuation. Depending upon the elastic properties of the insulation material 1, the energy pulse may also cause it to resonate. The damping of the vibration of the steel sheet will also depend upon the elastic properties of the insulation material 1, and the difference in moduli between the steel skin and the insulation material 1.

An acoustic sensor 11 is used to measure all the vibrations in the steel sheet 2 and these readings are recorded continuously by a processor 12. The results are then compared with sets of results taken from panels of known composition in order to identify the likely composition of the test panel. In the event, then, that the results of the heat dissipation test are not fully conclusive, the results of the acoustic test can then be used in combination with the results of the heat dissipation test in order uniquely to identify the test material.

The invention described above utilises both a heat dissipation test and an acoustic test in order to identify the composition of a test panel.

## Claims

1. A method of non-destructive testing of a panel of composite insulation material comprising the carrying out of a first test including the steps of heating at least a portion of a surface of the test panel and measuring said heat dissipation from said surface over time in order to obtain a heat dissipation characteristic for said test panel, wherein the method further comprises the carrying out of a second test including the steps of striking the surface of the test panel in order to pass a pulse of energy therethrough, measuring the vibrations within the panel over time in order to produce a characteristic of the vibratory modes of the test panel, and comparing said heat dissipation characteristic with reference heat dissipation characteristics and comparing said characteristic vibratory modes with reference vibratory modes in order to identify the composition of the test panel.

2. A method according to claim 1, wherein said portion of the surface of the test panel is heated by applying a heat source to said portion of the surface for a pre-defined time or until a pre-defined amount of energy has been imparted to the panel.

3. A method according to claim 2, wherein the heat source is a local or point heat source.

4. A method according to claim 1, wherein said heating of said surface of the test panel is effected by passing magnetic flux through a metallic outer skin of the test panel so as to induce electrical eddy currents within said skin which heat the surface of the test panel.

5. A method according to claim 4, wherein said eddy currents are generated by positioning an electro-magnetic coupler proximate to said surface of said test panel, the electro-magnetic coupler comprising coils wound on a magnetically susceptible core constructed as an incomplete magnetic circuit so that, upon locating the coupler close to the test panel, the magnetic field interacts with the metal skin to complete the magnetic circuit.

6. A method according to claim 1 or claim 2, wherein the heat source is a radiant heat source which is applied to the surface of the test panel for a pre-defined period of time in order to raise the temperature of the panel at the point of application by a pre-defined amount.

7. A method according to any of the preceding claims, wherein the heat dissipation is measured by measuring the thermal radiation emitted from heated portion of the surface of the test panel.

8. A method according to claim 7, wherein said heat dissipation measurements are taken at intervals throughout the thermal decay cycle of the test panel, preferably until it has substantially reached ambient temperature and preferably at least ten distinct readings are taken at equally spaced time intervals.

9. A method according to claim 7 or claim 8, wherein said thermal radiation emission is measured using a thermal imaging device, the viewing area of said device being centred on the point of application of heat to the test panel and preferably being three times the diameter of the area over which the heat is applied to the surface of the panel.

10. A method according to any of the preceding claims, wherein the surface of the test panel is struck with a tuned hammer in order to produce said pulse of energy.

11. A method according to any of the preceding claims, wherein said vibrations within the panel are monitored using an acoustic sensor capable of responding to frequencies at least one octave over the anticipated resonant frequencies.

12. A method according to claim 11, wherein the acoustic sensor takes measurements defining both the amplitudes and the frequencies of the vibratory modes.

## Patentansprüche

1. Verfahren zum zerstörungsfreien Testen einer Platte aus Verbundisolationsmaterial, das ein Durchführen eines ersten Tests, umfassend die Schritte eines Erwärmens mindestens eines Bereichs einer Oberfläche der Testplatte und Messen der Wärmeabnahme von der Oberfläche über die Zeit, um eine Wärmeabnahme-Charakteristik für die Testplatte zu erhalten, aufweist, wobei das Verfahren weiterhin das Durchführen eines zweiten Tests, umfassend die Schritte eines Aufschlagens auf die Oberfläche der Testplatte, um einen Energieimpuls dort hindurch zu führen, Messen der Vibrationen innerhalb der Platte über die Zeit, um eine Charakteristik der Vibrationsmoden der Testplatte zu erzeugen, und Vergleichen der Wärmeabnahme-Charakteristik mit Referenzwärmeabnahme-Charakteristika, und Vergleichen der charakteristischen Vibrationsmoden mit Referenz-Vibrationsmoden, um die Zusammensetzung der Testplatte zu identifizieren, aufweist.

2. Verfahren nach Anspruch 1, wobei der Bereich der Oberfläche der Testplatte durch Aufbringen einer Wärmequelle auf den Bereich der Oberfläche für eine vorbestimmte Zeit, oder bis eine vorbestimmte Energiemenge auf die Platte aufgebracht worden ist, erwärmt wird.

3. Verfahren nach Anspruch 2, wobei die Wärmequelle eine lokale oder Punktwärmequelle ist.

4. Verfahren nach Anspruch 1, wobei die Erwärmung der Oberfläche der Testplatte durch Hindurchführen eines magnetischen Flusses durch eine metallische, äußere Schicht der Testplatte, um so elektrische Wirbelströme innerhalb der Schicht, die die Oberfläche der Testplatte erwärmen, zu induzieren, vorgenommen wird.

5. Verfahren nach Anspruch 4, wobei die Wirbelströme durch Positionieren eines elektromagnetischen Kopplers nahe zu der Oberfläche der Testplatte erzeugt werden, wobei der elektromagnetische Koppler Spulen aufweist, die auf einen magnetisch ansprechenden Kern gewunden sind, der als ein unvollständiger, magnetischer Kreis so aufgebaut ist, dass, unter Anordnen des Kopplers nahe zu der Testplatte, das magnetische Feld mit der metallischen, äußeren Schicht zusammenwirkt, um den magnetischen Kreis zu vervollständigen.

6. Verfahren nach Anspruch 1 oder Anspruch 2, wobei die Wärmequelle eine Strahlungswärmequelle ist, die auf die Oberfläche der Testplatte für eine vordefinierte Zeitperiode aufgebracht ist, um die Temperatur der Platte an dem Punkt einer Aufbringung um einen vorbestimmten Betrag anzuheben.

7. Verfahren nach einem der vorhergehenden Ansprüche, wobei die Wärmeabnahme durch Messen der thermischen Strahlung, abgegeben von dem erwärmten Bereich der Oberfläche der Testplatte, gemessen wird.

8. Verfahren nach Anspruch 7, wobei die Wärmeabnahmemessungen unter Intervallen über den thermischen Abfallzyklus der Testplatte vorgenommen werden, vorzugsweise bis sie im Wesentlichen Umgebungstemperatur erreicht hat, und wobei vorzugsweise mindestens zehn bestimmte Auslesungen unter gleichmäßig beabstandeten Zeitintervallen vorgenommen werden.

9. Verfahren nach Anspruch 7 oder Anspruch 8, wobei die thermische Strahlungsemission unter Verwendung einer thermischen Bilderzeugungsvorrichtung gemessen wird, wobei der Betrachtungsbereich der Vorrichtung an dem Punkt einer Aufbringung der Wärme auf die Testplatte zentriert wird und vorzugsweise dreimal dem Durchmesser des Bereichs entspricht, über den die Wärme auf die Oberfläche der Platte aufgebracht wird.

10. Verfahren nach einem der vorhergehenden Ansprüche, wobei die Oberfläche der Testplatte mit einem abgestimmten Hammer angeschlagen wird, um den Energieimpuls zu erzeugen.

11. Verfahren nach einem der vorhergehenden Ansprüche, wobei die Vibrationen innerhalb der Platte unter Verwendung eines akustischen Sensors überwacht werden, der dazu geeignet ist, auf Frequenzen mindestens eine Oktave über den erwarteten Resonanzfrequenzen anzusprechen.

12. Verfahren nach Anspruch 11, wobei der akustische Sensor Messungen vornimmt, die sowohl die Amplituden als auch die Frequenzen der Vibrationsmoden definieren.

## Revendications

1. Procédé pour les essais non destructifs d'un panneau en matériau isolant composite comprenant la réalisation d'un premier test, comprenant les étapes consistant à chauffer au moins une portion d'une surface du panneau de test et à mesurer ladite dissipation thermique à partir de ladite surface dans le temps, afin d'obtenir une caractéristique de dissipation de chaleur pour ledit panneau de test, dans lequel le procédé comprend de plus la réalisation d'un second test comprenant les étapes consistant à frapper la surface du panneau de test pour y faire traverser une impulsion d'énergie, à mesurer les vibrations à l'intérieur du panneau dans le temps afin de produire une caractéristique des modes vibratoires du panneau de test, et comparer ladite caractéristique de dissipation de chaleur avec des caractéristiques de dissipation de chaleur de référence, et comparer ladite caractéristique des modes vibratoires avec les modes vibratoires de référence pour identifier la composition du panneau de test.

2. Procédé selon la revendication 1, dans lequel ladite portion de la surface du panneau de test est chauffée en appliquant une source de chaleur sur ladite portion de la surface pendant une durée prédéterminée ou jusqu'à ce qu'une quantité prédéfinie d'énergie soit transmise au panneau.

3. Procédé selon la revendication 2, dans lequel la source de chaleur est une source de chaleur locale ou ponctuelle.

4. Procédé selon la revendication 1, dans lequel ledit chauffage de ladite surface du panneau de test effectué en faisant passer un flux magnétique à travers une pellicule extérieure métallique du panneau de test, de façon à induire des courants électriques de Foucault à l'intérieur de ladite pellicule, qui chauffent la surface du panneau de test.

5. Procédé selon la revendication 4, dans lequel lesdits courants de Foucault sont produits en positionnant un coupleur électromagnétique à proximité de ladite surface dudit panneau de test, le coupleur électromagnétique comprenant des bobines enroulées sur un noyau sensible magnétiquement, construit sous la forme d'un circuit magnétique incomplet, de sorte que lors du positionnement du coupleur à proximité du panneau de test, le champ magnétique interagit avec la pellicule métallique pour achever le circuit magnétique.

6. Procédé selon la revendication 1 ou la revendication 2, dans lequel la source de chaleur est une source de chaleur radiante qui est appliquée sur la surface du panneau de test pendant une durée prédéfinie, afin d'élever la température du panneau au point d'application d'une quantité prédéfinie.

7. Procédé selon l'une quelconque des revendications précédentes, dans lequel la dissipation thermique est mesurée en mesurant la radiation thermique émise. à partir de la portion chauffée de la surface du panneau de test.

8. Procédé selon la revendication 7, dans lequel lesdites mesures de dissipation thermique sont prises à des intervalles au cours du cycle de décroissance thermique du panneau de test, de préférence jusqu'à ce qu'il ait atteint sensiblement une température ambiante et, de préférence, au moins dix lectures distinctes sont prélevées à des intervalles de temps espacés de façon égale.

9. Procédé selon la revendication 7 ou 8, dans lequel ladite émission de radiation thermique est mesurée en utilisant un dispositif d'imagerie thermique, la zone de visualisation dudit dispositif étant centrée sur le point d'application de la chaleur sur le panneau de test et, de préférence, étant égale à trois fois le diamètre de la zone sur laquelle est appliquée la chaleur sur la surface du panneau.

10. Procédé selon l'une quelconque des revendications précédentes, dans lequel la surface du panneau de test est frappée à l'aide d'un marteau syntonisé afin de produire ladite impulsion d'énergie.

11. Procédé selon l'une quelconque des revendications précédentes, dans lequel lesdites vibrations à l'intérieur du panneau sont surveillées en utilisant un capteur acoustique capable de répondre à des fréquences au moins une octave au-dessus des fréquences résonantes escomptées.

12. Procédé selon la revendication 11, dans lequel le capteur acoustique effectue des mesures en définissant à la fois les amplitudes et les fréquences des modes vibratoires.
